# EUROPÄISCHE PATENTSCHRIFT

(11) **EP 1 987 579 B1**
(45) Veröffentlichungstag und Bekanntmachung des Hinweises auf die Patenterteilung: **15.03.2017**
(21) Anmeldenummer: 06818893.7
(22) Anmeldetag: 29.11.2006
(51) Int. Cl.: H02K 3/24, F04D 25/08, F04D 13/06

(54) **MOTORKREISELPUMPE**
MOTOR CENTRIFUGAL PUMP
POMPE CENTRIFUGE À MOTEUR

(30) Priorität: 23.02.2006 DE 102006008423
(43) Veröffentlichungstag der Anmeldung: 05.11.2008
(73) Patentinhaber: WILO SE, 44263 Dortmund (DE)
(72) Erfinder: MATERNE, Thomas, 59348 Lüdinghausen (DE); STRELOW, Günter, 44801 Bochum (DE)
(74) Vertreter: Cohausz Hannig Borkowski Wißgott
(86) Internationale Anmeldenummer: PCT/EP2006/011435
(87) Internationale Veröffentlichungsnummer: WO 2007/095982

(56) Entgegenhaltungen:
- EP-A- 0 438 334
- EP-A1- 0 699 274
- EP-A2- 0 553 831
- EP-A2- 1 215 801
- WO-A-02/35098
- GB-A- 1 203 438
- US-A- 3 292 549
- US-A- 4 496 866
- US-A- 4 780 953
- US-A- 5 015 159

## Beschreibung

Die Erfindung betrifft eine Motorkreiselpumpe mit einem von Kunststoff umspritzten Statorpaket des elektrischen Motors.

Aus der US-A-3292549 ist es bekannt, das Statorpaket eines Elektromotors mit Kunststoff zu umspritzen. Ein Nachteil einer derartigen Umspritzung besteht darin, dass der verwendete Kunststoff einen guten thermischen Isolator darstellt. Der eingebettete Stator wird thermisch hoch belastet, wobei die hohen Temperaturen schlecht an die Umgebung oder das Medium abgegeben werden können. Ferner bestehen die bekannten Nassläuferpumpen für Heizungs- und auch Brauchwasser aus einer Vielzahl von Teilen, die miteinander montiert werden müssen. Insbesondere sind zum Aufbau des gekapselten Elektromotors eine Vielzahl von Montageschritten nötig. Ferner ist es aus der US-A-4780953 bekannt, bei einer Tauchpumpe in der Lagerschale eine Vielzahl von Kühlkanälen anzuordnen. Aber auch hier ist ein erheblicher Herstellungs- und Montageaufwand gegeben.

Aufgabe der Erfindung ist es, bei Motorkreiselpumpen der eingangs genannten Art auf konstruktiv einfache Weise die Temperaturen des Stators und insbesondere auch der Motorenelektronik zu verringern und den Herstellungs- und Montageaufwand wesentlich zu verringern.

Diese Aufgabe wird erfindungsgemäß dadurch gelöst, dass in dem Kunststoff Kühlkanäle angeordnet sind, die vom Fördermedium durchflossen sind, wobei der Kunststoff in die Statorzwischenräume unter Bildung der Kühlkanäle eingespritzt ist

Hierdurch werden die hohen Temperaturen am Stator und der zur Regelung bzw. Steuerung der Pumpe notwendigen Elektronik durch mediumsgefüllte Kühlkanäle bzw. Kammern reduziert. Mittels der Umspritzung des elektrischen Stators wird die Anzahl an Einzelteilen stark reduziert und somit der Herstellungs- und Montageaufwand minimiert. Durch einen einzigen Kunststoffspritz-Arbeitsprozess wird der Stator erstellt. Hierbei werden durch die Umspritzung viele Funktionen gleichzeitig berücksichtigt.

Vorteilhafte Ausgestaltungen der Erfindung sind in den Unteransprüchen aufgeführt.

Vier Ausführungsbeispiele der Erfindung sind in den Zeichnungen dargestellt und werden im Folgenden näher beschrieben. Es zeigen
- Fig. 1: einen axialen Schnitt durch ein erstes Ausführungsbeispiel eines Elektromotors mit angeschlossenem Pumpenläufer,
- Fig. 2: einen axialen Schnitt durch ein zweites Ausführungsbeispiel eines Elektromotors mit angeschlossenem Pumpenläufer,
- Fig. 3: einen axialen Schnitt durch ein drittes Ausführungsbeispiel eines Elektromotors mit angeschlossenem Pumpenläufer,
- Fig. 4: einen Querschnitt durch ein viertes Ausführungsbeispiel eines Elektromotors.

Die Motorkreiselpumpe besitzt eine Motorenwelle 1 mit einer Motorenachse 2. Die Motorenwelle 1 ist in zwei Radiallagern 3, 4 und einem Axiallager 5 innerhalb des Rotorraumes 6 gelagert. Auf der hydraulischen Seite ragt die Motorenwelle 1 aus dem Elektromotor heraus und trägt auf diesem Ende den Pumpenläufer 7, der im nicht dargestellten Pumpengehäuse liegt.

Im Rotorraum 6 ist der Rotor 8 auf der Welle 1 befestigt, wobei der Rotorraum 6 von Wicklungen 9 und einem Statorpaket 10 umgeben ist.

Der Rotorraum 6, die Wicklungen 9 und das Statorpaket 10 sind von einem Kunststoffmaterial 11 umgeben, das als Füllmasse zwischen diese Teile eingebracht insbesondere eingespritzt ist und vorzugsweise die Innenwand des Rotorraums 6 bildet, so dass ein zusätzlicher Spalttopf nicht erforderlich ist, sondern der Kunststoff den Spalttopf bildet. Ferner muss das Kunststoffmaterial außen nicht von einem Motorengehäuse umgeben sein, sondern es kann selber die Motorenaußenseite bilden.

Im Kunststoffmaterial 11 sind außerhalb und neben dem Rotorraum 6 parallel zur Motorenachse 2 Kühlkanäle bzw. Kühlkammern 12 angeordnet, die vorzugsweise zwischen den Wicklungen 9 liegen und auf der Hydraulikseite mit der Pumpenkammer über nicht dargestellte Öffnungen verbunden sind, so dass durch die Kühlkanäle 12 das von dem Pumpenläufer 7 geförderte Pumpen medium zur Kühlung des Motors strömt.

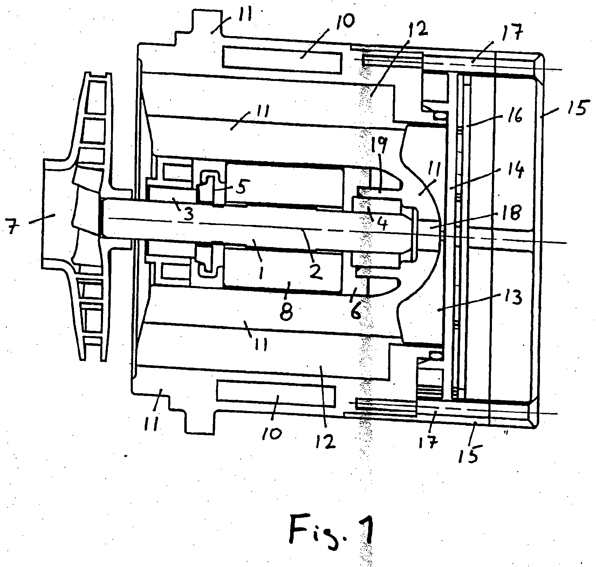

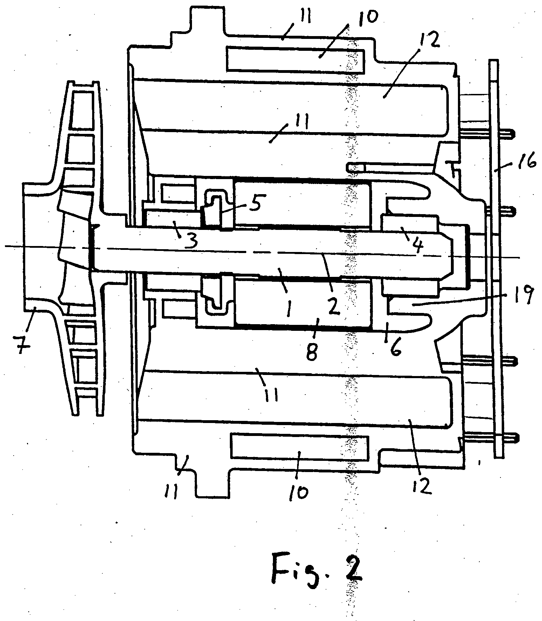

Entsprechend dem Ausführungsbeispiel nach Fig. 2 müssen hierbei die Kühlkanäle 12 miteinander nicht unbedingt verbunden sein, sondern es kann dafür gesorgt werden, dass durch die Verbindungsöffnung insbesondere die Verbindungsöffnungen des Kühlkanals mit der Pumpenkammer ein ausreichender Mediumwechsel innerhalb des Kühlkanals erfolgt. Im Ausführungsbeispiel nach Fig. 1 sind aber die Kühlkanäle 12 über Querkanäle oder eine Querkammer 13 miteinander verbunden, die auf der dem Pumpenläufer 7 abgewandten Seite des Motors außerhalb des Rotorraums 6 liegt. Hierbei ist die Querkammer 13 durch ein deckelförmiges Teil 14 insbesondere aus Kunststoff abdichtend abgeschlossen, das den Innenraum eines Elektronikgehäuses 15 von dem Motoreninneren trennt. An der Außenseite dieses kreisförmigen Teils 14, auf dem die Motorenachse 2 lotrecht steht, liegt parallel die Platine 16 der Motorenelektronik an, so dass die Elektronikteile durch die Flüssigkeit in der Querkammer 13 gekühlt werden.

Das Elektronikgehäuse 15 ist vorzugsweise durch Schrauben 17 am Kunststoffmaterial 11 befestigt, die parallel zur Motorenachse 2 liegen. Das Elektronikgehäuse 15 ist damit auf der Stirnseite des Motors befestigt, die dem hydraulischen Bereich abgewandt ist.

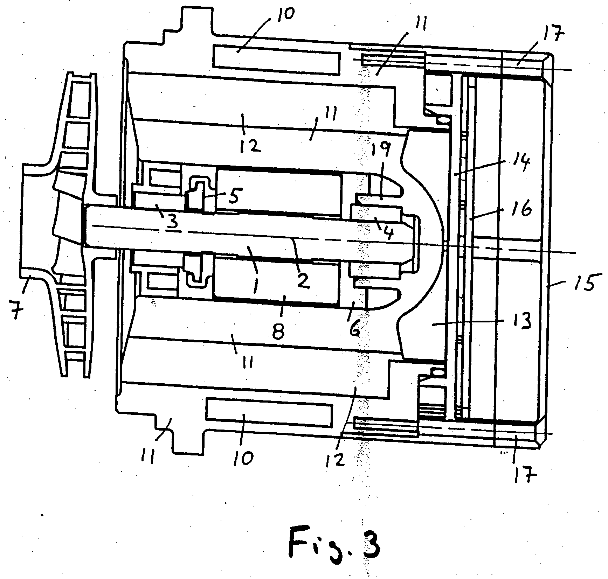

Die Querkammer 14 ist mit dem Rotorraum 6 über eine Öffnung, insbesondere einen koaxialen Kanal 18 verbunden, so dass die Förderflüssigkeit über die Kühlkanäle 12, die Querkammer 13, den Kanal 18 und den Rotorraum 6 über nicht dargestellte Öffnungen zur Pumpenkammer zurückfließt. Hierbei zeigt das Ausführungsbeispiel nach Fig. 3, dass auch eine Ausführung möglich ist, bei der eine Verbindung zwischen der Querkammer 13 und dem Rotorraum 6 nicht besteht. Auf der Innenseite des Rotorraums 6 ist am Kunststoffmaterial 11 auf der dem Pumpenläufer 7 abgewandten Seite und damit nahe der Querkammer 13 eine Kunststoffbuchse 19 koaxial angeformt, in der das Radiallager 4 einsitzt, so dass die Buchse 19 einen festen Halt für dieses Lager bildet. Auch die übrigen Lager können wahlweise oder zusätzlich von vorspringenden Bereichen des Kunststoffmaterials 11 gehalten sein.

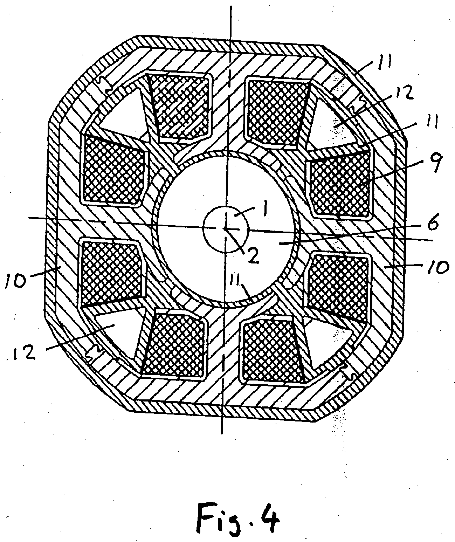

Aus Fig. 4 ist ersichtlich, welche Schnitte die Ausführungsbeispiele nach Fig. 1 bis 3 darstellen, wobei eine dreieckförmige Querschnittsform der Kühlkanäle erkennbar ist. In weiteren, nicht dargestellten Ausführungen können die Kühlkanäle auch andere Querschnittsformen besitzen und auch durch andere, nicht dargestellte Verbindungskanäle miteinander verbunden sein, um ein, zwei oder mehr Kreisläufe zu bilden.

## Patentansprüche

1. Motorkreiselpumpe mit einem von Kunststoff (11) umspritzten Statorpaket (10) des elektrischen Motors, **dadurch gekennzeichnet, dass** in dem Kunststoff (11) Kühlkanäle (12) angeordnet sind, die vom Fördermedium durchflossen sind, wobei der Kunststoff (11) in die Statorzwischenräume unter Bildung der Kühlkanäle (12) eingespritzt ist.

2. Pumpe nach Anspruch 1, **dadurch gekennzeichnet, dass** die Kühlkanäle (12) zumindest zu einem Teil parallel zur Motorenachse (2) verlaufen.

3. Pumpe nach Anspruch 1 oder 2, **dadurch gekennzeichnet, dass** zumindest Bereiche der Kühlkanäle (12) zwischen den Motorwicklungen (9) liegen.

4. Pumpe nach einem der vorherigen Ansprüche, **dadurch gekennzeichnet, dass** die Kühlkanäle (12) mit der das Fördermedium führenden Pumpenkammer über einen, zwei oder mehr Durchlässe verbunden sind.

5. Pumpe nach einem der vorherigen Ansprüche, **dadurch gekennzeichnet, dass** die Kühlkanäle (12) miteinander verbunden sind.

6. Pumpe nach einem der Ansprüche 1 bis 3, **dadurch gekennzeichnet, dass** die Kühlkanäle (12) keine Verbindung zur Pumpenkammer aufweisen und einen motorinternen Kreislauf bilden.

7. Pumpe nach einem der vorherigen Ansprüche, **dadurch gekennzeichnet, dass** mindestens ein Kühlkanal (12) insbesondere in Form einer Kammer (13) an der Elektronik des Motors insbesondere im Kreislauf vorbeigeführt ist.

8. Pumpe nach einem der vorherigen Ansprüche, **dadurch gekennzeichnet, dass** die Platine (16) der Motorenelektronik am Kunststoff nahe mindestens eines Kühlkanals (12, 13) angeordnet ist.

9. Pumpe nach einem der vorherigen Ansprüche, **dadurch gekennzeichnet, dass** mindestens ein Kühlkanal (12) auf der dem Pumpenlaufrad (7) abgewandten Seite des Motors durch ein deckeiförmiges Teil (14) aus Kunststoff und/oder Metall verschlossen und abgedichtet ist.

10. Pumpe nach Anspruch 9, **dadurch gekennzeichnet, dass** an der Außenseite des deckeiförmigen Teils (14) die Platine (16) der Motorenelektronik zur Kühlung anliegt.

11. Pumpe nach einem der vorherigen Ansprüche, **dadurch gekennzeichnet, dass** der Kunststoff (11) zusätzlich das Spaltrohr insbesondere den Spalttopf bildet.

12. Pumpe nach einem der vorherigen Ansprüche, **dadurch gekennzeichnet, dass** der Kunststoff (11) die Außenseite des Motors bildet.

13. Pumpe nach einem der vorherigen Ansprüche, **dadurch gekennzeichnet, dass** am Kunststoff (11) das Gehäuse (15) der Elektronik befestigt ist.

14. Verfahren zum Herstellen einer Pumpe nach einem der vorherigen Ansprüche, **dadurch gekennzeichnet, dass** der Kunststoff (11) in die Statorzwischenräume unter Bildung der Kühlkanäle (12) eingespritzt wird.

## Claims

1. Motor-driven rotary pump having a stator pack (10), which is encapsulated with plastic (11) by injection moulding, of the electric motor, **characterized in that**, in the plastic (11), there are arranged cooling ducts (12) through which the delivery medium flows, wherein the plastic (11) is injection-moulded into the stator intermediate spaces so as to form the cooling ducts (12).

2. Pump according to Claim 1, **characterized in that** the cooling ducts (12) run at least partially parallel to the motor axis (2).

3. Pump according to Claim 1 or 2, **characterized in that** at least regions of the cooling ducts (12) lie between the motor windings (9).

4. Pump according to one of the preceding claims, **characterized in that** the cooling ducts (12) are connected by way of one, two or more passages to the pump chamber that conducts the delivery medium.

5. Pump according to one of the preceding claims, **characterized in that** the cooling ducts (12) are connected to one another.

6. Pump according to one of Claims 1 to 3, **characterized in that** the cooling ducts (12) do not have a connection to the pump chamber, and form a motor-internal circuit.

7. Pump according to one of the preceding claims, **characterized in that** at least one cooling duct (12) is led, in particular in the form of a chamber (13), past the electronics of the motor, in particular in the circuit.

8. Pump according to one of the preceding claims, **characterized in that** the circuit board (16) of the motor electronics is arranged on the plastic close to the at least one cooling duct (12, 13).

9. Pump according to one of the preceding claims, **characterized in that** at least one cooling duct (12) is, on that side of the motor which is averted from the pump impeller (7), closed and sealed off by way of a cover-like part (14) composed of plastic and/or metal.

10. Pump according to Claim 9, **characterized in that** the circuit board (16) of the motor electronics bears, for cooling purposes, against the outer side of the cover-like part (14).

11. Pump according to one of the preceding claims, **characterized in that** the plastic (11) additionally forms the containment can, in particular the containment shell.

12. Pump according to one of the preceding claims, **characterized in that** the plastic (11) forms the outer side of the motor.

13. Pump according to one of the preceding claims, **characterized in that** the housing (15) of the electronics is fastened to the plastic (11).

14. Method for producing a pump according to one of the preceding claims, **characterized in that** the plastic (11) is injection-moulded into the stator intermediate spaces so as to form the cooling ducts (12).

## Revendications

1. Pompe centrifuge à moteur comportant un bloc de stator (10) du moteur électrique surmoulé en matière plastique (11), **caractérisée en ce que** des canaux de refroidissement (12) traversés par le fluide transporté sont disposés dans la matière plastique (11), dans lequel la matière plastique (11) est injectée dans l'espace intermédiaire de stator en formant les canaux de refroidissement (12).

2. Pompe selon la revendication 1, **caractérisée en ce que** les canaux de refroidissement (12) s'étendent au moins en partie parallèlement à l'axe de moteur (2).

3. Pompe selon la revendication 1 ou 2, **caractérisée en ce qu'**au moins certaines zones des canaux de refroidissement (12) sont situées entre les enroulements de moteur (9).

4. Pompe selon l'une quelconque des revendications précédentes, **caractérisée en ce que** les canaux de refroidissement (12) sont reliés à la chambre de pompe acheminant le fluide transporté par l'intermédiaire d'un ou de deux passages ou plus.

5. Pompe selon l'une quelconque des revendications précédentes, **caractérisée en ce que** les canaux de refroidissement (12) sont reliés les uns aux autres.

6. Pompe selon l'une quelconque des revendications 1 à 3, **caractérisée en ce que** les canaux de refroidissement (12) ne présentent aucune liaison avec la chambre de pompe et forment un circuit interne du moteur.

7. Pompe selon l'une quelconque des revendications précédentes, **caractérisée en ce qu'**au moins un canal de refroidissement (12) est amené à passer, notamment sous la forme d'une chambre (13), sur l'électronique du moteur, notamment dans le circuit.

8. Pompe selon l'une quelconque des revendications précédentes, **caractérisée en ce que** la carte de circuit (16) de l'électronique du moteur est disposée sur la matière plastique à proximité d'au moins un canal de refroidissement (12, 13).

9. Pompe selon l'une quelconque des revendications précédentes, **caractérisée en ce qu'**au moins un canal de refroidissement (12) est fermé et est rendu étanche du côté tourné en sens opposé à la roue de pompe (7) par une partie formant capot (14) constituée de matière plastique et/ou de métal.

10. Pompe selon la revendication 9, **caractérisée en ce que** la carte de circuit (16) de l'électronique de moteur est adjacente à la face externe de la partie formant capot (14) à des fins de refroidissement.

11. Pompe selon l'une quelconque des revendications précédentes, **caractérisée en ce que** la matière plastique (11) forme en outre le tube d'entrefer et en particulier, le pot d'entrefer.

12. Pompe selon l'une quelconque des revendications précédentes, **caractérisée en ce que** la matière plastique (11) forme la face externe du moteur.

13. Pompe selon l'une quelconque des revendications précédentes, **caractérisée en ce que** le boîtier (15) de l'électronique est fixé à la matière plastique (11).

14. Procédé de fabrication d'une pompe selon l'une quelconque des revendications précédentes, **caractérisé en ce que** la matière plastique (11) est injectée dans l'espace intermédiaire de stator en formant les canaux de refroidissement (12).
